# EUROPÄISCHE PATENTSCHRIFT

(11) **EP 3 488 280 B1**
(45) Veröffentlichungstag und Bekanntmachung des Hinweises auf die Patenterteilung: **27.03.2024**
(21) Anmeldenummer: 17758794.6
(22) Anmeldetag: 13.07.2017
(51) Int. Cl.: G02B 21/00, G02B 21/18, G02B 21/36, G02B 21/08

(54) **SYSTEM ZUR GLEICHZEITIGEN VIDEOGRAFISCHEN ODER FOTOGRAFISCHEN ERFASSUNG VON MEHREREN BILDERN**
SYSTEM FOR THE SIMULTANEOUS VIDEOGRAPHIC OR PHOTOGRAPHIC ACQUISITION OF MULTIPLE IMAGES
SYSTÈME DE DÉTECTION VIDÉOGRAPHIQUE OU PHOTOGRAPHIQUE SIMULTANÉE DE PLUSIEURS IMAGES

(30) Priorität: 25.07.2016 DE 102016008854
(43) Veröffentlichungstag der Anmeldung: 29.05.2019
(73) Patentinhaber: Universität Duisburg-Essen, 45141 Essen (DE)
(72) Erfinder: GUNZER, Matthias, 45239 Essen (DE); VIGA, Reinhard, 47839 Krefeld (DE); OLFEN, Sven, 47279 Duisburg (DE); GRABMAIER, Anton, 47441 Moers (DE); SCHUSTER, Marc, 40225 Düsseldorf (DE)
(74) Vertreter: Cohausz Hannig Borkowski Wißgott
(86) Internationale Anmeldenummer: PCT/EP2017/000835
(87) Internationale Veröffentlichungsnummer: WO 2018/019406

(56) Entgegenhaltungen:
- EP-A2- 0 840 502
- WO-A1-2013/099141
- WO-A2-02/075370
- US-A1- 2001 002 120
- US-A1- 2003 146 372
- US-A1- 2003 197 791
- US-A1- 2004 004 759
- US-A1- 2004 223 199
- US-A1- 2014 098 213
- US-A1- 2014 333 998
- US-A1- 2016 131 890

## Beschreibung

Die Erfindung betrifft ein System zur videografischen oder fotografischen parallelen Erfassung von mehreren Bildern, insbesondere von Proben in den mehreren Probenkammern einer Probenplatte, bevorzugt einer Mikrotiterplatte, umfassend wenigstens ein Array von Mikroskopen mit zueinander parallelen optischen Achsen, wobei jedes Mikroskop einen eigenen Bildaufnehmer-Chip und ein eigenes Objektiv umfasst.

Unter einem Mikroskop wird dabei allgemein eine Vorrichtung verstanden, die es gestattet eine Probe gegenüber ihrer natürlichen Größe vergrößert anzusehen oder bildlich darzustellen, bei der also das Abbild der Probe im Auge des Betrachters oder auf einem Bildaufnehmer-Chip vergrößert ist.

Systeme mit in Arrays angeordneten Kameras sind im Stand der Technik bekannt. Beispielsweise ist es bekannt, mehrere Standard-Kameras, wie z. B. Spiegelreflexkameras mit jeweils einem Bildaufnehmer-Chip und einem Objektiv zu einem Array zu konfigurieren, in welchem die Kameras in mehreren Zeilen und Spalten nebeneinander angeordnet sind.

Solche Konfigurationen werden z. B. verwendet, um dasselbe Motiv exakt zeitgleich mit verschiedenen Belichtungsparametern erfassen zu können oder aber bei gleichen Belichtungsparametern die fotografische Auflösung über die Auflösung jedes einzelnen Bildaufnehmer-Chips hinaus zu vergrößern.

In der Medizintechnik und der Biologie ist die Anwendung bekannt, mehrere Proben in Probenkammern von Probenplatten videografisch oder fotografisch zu erfassen. Z. B. sollen Zellbewegungen dokumentiert werden, um hieraus diagnostische Schlüsse zu ziehen. Bevorzugt soll dabei die Spur einer sich autonom bewegenden lebenden Zelle visualisiert werden. Dabei sollen aus ökonomischen Gründen möglichst viele verschiedene Proben innerhalb eines vorgegebenen Zeitfensters erfasst werden.

Bislang wird hierfür so vorgegangen, dass mittels eines fotofähigen bzw. videofähigen Mikroskops, umfassend einen Bildaufnehmer-Chip und ein Objektiv nacheinander jede Probe in den verschiedenen Probenkammern erfasst wird. Dazu wird zwischen den jeweiligen Erfassungen durch Bewegung der Probenplatte relativ zum im Erdbezugssystem stillstehenden Mikroskop eine neue Probenkammer in der optischen Achse des Mikroskops positioniert.

Verschiebungen der Probenplatten benötigen von Probenkammer zu Probenkammer bislang ca. 2 sec, so dass bei einer gewünschten zeitlichen Auflösung der dokumentierten Zellbewegung von kleiner 8 Sekunden nicht mehr als 4 Probenkammern erfasst werden können bis die Probenplatte wieder zur ersten der 4 Probenkammern zurückgefahren werden muss. Eine Erfassung von typischerweise 96 Probenkammern einer dem Industriestandard entsprechenden Mikrotiterplatte ist damit sehr zeitaufwändig und für Filme mit einer zeitlichen Auflösung von kleiner 8 Sekunden pro Probenkammer mit vorhandenen Systemen nicht möglich.

Neben dem großen Zeitaufwand besteht auch das Problem, dass durch die Bewegung der Probenplatte relativ zum still stehenden Mikroskop jede Probe bzw. die darin befindlichen Zellen und die sie umgebende Flüssigkeit beschleunigt und wieder abgebremst wird. Die dadurch erzeugten auf die Zellen und die Flüssigkeit wirkenden Impulse können die natürlichen Zellbewegungen überlagern und Messergebnisse verfälschen.

Eine reine Nebeneinanderanordnung von mehreren einzelnen Mikroskopen (aus Bildaufnehmer-Chip und Objektiv) in einem Array, um eine Vielzahl von Probenkammern oder alle Probenkammern einer Probenplatte gleichzeitig erfassen zu können scheitert nach bisherigem Stand der Technik daran, dass es keine Mikroskope aus Objektiv und Bildaufnehmer-Chip, sowie bevorzugt auch einer Beleuchtung gibt, die derart kleinbauend ausgeführt sind, dass diese in einem Abstand in Reihen und Spalten nebeneinander positioniert werden können, welcher dem üblichen Probenkammerabstand von bekannten Probenplatten entspricht, bei Mikrotiterplatten mit 96 Probenkammern z. B. kleiner als 10 mm.

Gattungsgemäße Systeme zur videografischen oder fotografischen Erfassung von Bildern sind aus der US 2016/131890 A1 und aus der US 2004/223199 A1 bekannt.

Es ist daher eine Aufgabe der Erfindung, ein System bereit zu stellen, mit dem mittels eines Arrays von Mikroskopen, jeweils umfassend einen Bildaufnehmer-Chip und ein Mikroskopobjektiv, bevorzugt auch eine Beleuchtung, mehrere Bilder parallel erfasst werden können, bevorzugt mehrere Bilder von verschiedenen Probenkammern einer Probenplatte, bevorzugt von allen Probenkammern (Wells) einer dem Standard entsprechenden Mikrotiterplatte mit 96 oder 384 Probenkammern, bevorzugt mit einem zeitlichen Abstand zwischen den aufeinander folgenden Bildern eines Videos einer jeweiligen Probenkammer von kleiner 8 Sekunden.

Unter einer parallelen Erfassung von Bildern aus verschiedenen Probenkammern ist nicht zwingend zu verstehen, dass die für eine auf die Erfassung nachfolgende Bildauswertung vorgesehenen Bilder alle zeitlich exakt synchron erfasst sind, sondern bevorzugt nur, dass alle zur Auswertung vorgesehenen Bilder innerhalb eines für die Erfassung vorgesehenen zeitlichen Intervalls erfasst werden, insbesondere innerhalb von weniger als 8 Sekunden erfasst werden.

Innerhalb eines solchen Intervalls können die einzelnen zur Bildverarbeitung vorgesehenen Bilder Erfassungszeitpunkte aufweisen, die sich untereinander unterscheiden, insbesondere um wenige Sekunden, bevorzugt weniger als 8 Sekunden, besonders bevorzugt weniger als 1 Sekunde. Die einzelnen Bilderserien sollen bevorzugt dabei einen zumindest weitgehend konstanten Rhythmus der Aufnahmezeitpunkte haben. Bevorzugt wird hierunter verstanden, dass die einzelnen Bilder eines Videos, das einer jeweiligen Probenkammer zugeordnet ist/wird, einen zeitlichen Abstand zueinander haben, der um weniger als 1%, bevorzugt weniger als 0,1 % um den über alle Bilder gemittelten zeitlichen Bild-Abstand variiert.

Bevorzugt ist es eine weitere Aufgabe die Anordnung der einzelnen Mikroskope so zu gestalten, dass der seitliche Abstand der optischen Achsen (betrachtet senkrecht zu den optischen Achsen) benachbarter Mikroskope gleich dem Abstand der Probenkammern einer Probenplatte, bevorzugt einer Mikrotiterplatte und besonders bevorzugt einer 96-Well Mikrotiterplatte gemäß ANSI-Industriestandard ist.

Weiter bevorzugt ist es, externe Bewegungseinflüsse auf die Proben in einer Probenkammer bei dem erfindungsgemäßen System zu eliminieren.

Erfindungsgemäß wird die Aufgabe durch ein System gemäß Anspruch 1 gelöst.

Das System umfasst wenigstens eine Trägerplatine, auf deren Oberfläche alle Bildaufnehmer-Chips aller Mikroskope eines Arrays gemeinsam in einer Zeilen- und Spaltenanordnung nebeneinanderliegend befestigt sind und das eine die Bilddatenverarbeitung vornehmende Elektronik umfasst, die seitlich neben dem Array von Bildaufnehmer-Chips und/oder hinter dem Array von Bildaufnehmer-Chips angeordnet ist und das ein Array von Objektiven, insbesondere Mikroskop-Objektiven, mit einer korrespondierenden Zeilen- und Spaltenanordnung umfasst, das in Richtung der optischen Achsen vor den Bildaufnehmer-Chips angeordnet ist.

In einer bevorzugten Weiterbildung kann zusätzlich zu dem Array von Bildaufnehmer-Chips und dem Array von Mikroskop-Objektiven auch ein in Spalten und Zeilenzahl korrespondierendes Array von Beleuchtungseinrichtungen vorgesehen sein, insbesondere so, dass jedem Mikroskop-Objektiv eine eigene Beleuchtungseinrichtung zugeordnet ist. So kann für jedes Mikroskop eine eigene homogene Ausleuchtung der Mikroskop-Bilder erzeugt werden. Durch die Beleuchtungseinrichtungen kann hierbei bevorzugt eine köhler'sche oder modifizierte köhler'sche Beleuchtung ausgebildet sein.

Ein jeweiliges Array ist dabei bevorzugt so gebildet, dass die Zeilen und Spalten senkrecht zueinander verlaufen.

Dabei ist festzuhalten, dass eine die Bilddatenverarbeitung vornehmende Elektronik vorgesehen ist, um aus dem Datenstrom der Bildaufnehmer-Chips Bilder und Bilderserien (Videosequenzen) zu generieren, die der Bildauswertung zugrundgelegt werden können. Nicht zwingend übernimmt diese Elektronik auch die Bildauswertung selbst, z. B. hinsichtlich der Bewegungsverfolgung von Zellen einer Probe, wenngleich dies auch vorgesehen sein kann.

Der Erfindung liegt der Gedanke zugrunde, dass der eigentliche limitierende Faktor, der die Nähe der Nebeneinanderanordnung von foto- oder videofähigen Mikroskopen beschränkt, im Wesentlichen nicht der Bildaufnehmer-Chip der jeweiligen Kamera ist, sondern die Elektronik, die benötigt wird, um den Bilddatenstrom eines jeweiligen Bildaufnehmer-Chips zu verarbeiten sowie die äußeren Dimensionen der zurzeit verfügbaren Mikroskopobjektive.

So liegt der Erfindung im Kern die Überlegung zugrunde, diese benötigte Elektronik örtlich von jedem Bildaufnehmer-Chip zu trennen und für mehrere Bildaufnehmer-Chips, bevorzugt für alle eines auf der gemeinsamen Trägerplatine gebildeten Arrays, sodann separat zu diesen anzuordnen.

Hierdurch können die einzelnen Bildaufnehmer-Chips genügend nahe in einer Array-Anordnung zueinander positioniert werden. Die Reihen- und Spaltenanordnung der Bildaufnehmer-Chips kann dabei so erfolgen, dass diese korrespondierend ist zu der Anordnung der Probenkammern einer Probenplatte, bevorzugt einer 96-Well Mikrotiterplatte gemäß ANSI-Industriestandard. Bevorzugt befindet sich innerhalb des durch die Bildaufnehmer-Chips gebildeten Arrays außer den Bildaufnehmer-Chips keine sonstige elektronische Komponente, abgesehen von Leiterbahnen.

Dadurch, dass die Elektronik in Bereichen hinter den Bildaufnehmer-Chips und/oder besonders bevorzugt seitlich neben einem Array von Bildaufnehmer-Chips angeordnet ist, wird der Bereich zwischen benachbarten Bildaufnehmer-Chips von solcher Elektronik freigehalten und limitiert deren Anordnung zueinander somit nicht mehr. Der einzige limitierende Faktor wird demnach bei der Erfindung nur noch durch die Größe der Bildaufnehmer-Chips selbst gebildet.

Seitlich neben dem Array bedeutet dabei, dass die Elektronik in einer Richtung senkrecht zu den optischen Achsen neben dem Flächenbereich positioniert ist, der auf der Trägerplatine von dem Array von Bildaufnehmer-Chips eingenommen wird. Hinter dem Array bedeutet, dass die Elektronik in einer Richtung parallel zu den optischen Achsen auf der Seite der Trägerplatine liegt, die der die Bildaufnehmer-Chips umfassenden Oberfläche gegenüberliegt.

In einer ersten möglichen, aber nicht zur Erfindung zählenden Ausführung der seitlichen Anordnung kann es vorgesehen sein, dass die die Bilddatenverarbeitung vornehmende Elektronik zu allen vier Seiten um das Array von Bildaufnehmer-Chips herum angeordnet ist.

In dieser Anordnung ist das System auf die Anzahl der Bildaufnehmer-Chips und die zugeordneten Objektive beschränkt und kann nicht erweitert werden. Sofern die Anzahl und Anordnung der in dieser oder auch nachfolgenden Ausführungen gebildeten Mikroskope nicht der Anzahl der Probenkammern einer Probenplatte entspricht kann die Erfindung vorsehen, Probenplatte und das Array von gebildeten Mikroskopen relativ zueinander zu verschieben und nacheinander Felder von mehreren Probenkammern zu erfassen, die der Größe des gebildeten Arrays entsprechen.

In einer zweiten Ausführung kann die Erfindung vorsehen, dass die die Bilddatenverarbeitung vornehmende Elektronik an höchstens zwei Seiten neben dem Array von Bildaufnehmer-Chips angeordnet ist, insbesondere an den zwei gegenüberliegenden Seiten oder an den zwei aneinander angrenzenden Seiten. Bei einer solchen Anordnung der Elektronik können die Trägerplatinen, welche ein jeweiliges Array umfassen, in zwei Richtungen nebeneinander angeordnet werden, um die Arraygröße insgesamt zu vergrößern.

In einer weiteren besonders bevorzugten Möglichkeit kann die die Bilddatenverarbeitung vornehmende Elektronik an nur einer Seite neben dem Array von Bildaufnehmer-Chips angeordnet sein. In diesem Fall können Trägerplatinen mit Ihren jeweiligen Arrays zu drei Seiten nebeneinander angeordnet werden, um die effektive Gesamtarraygröße zu vergrößern.

Bei einer Anordnung der Elektronik hinter den Bildaufnehmer-Chips, z. B. auf der Rückseite der Trägerplatine oder auf einer dazu parallel liegenden Platine besteht sogar die Möglichkeit die Trägerplatinen zu allen vier Seiten eines jeweiligen Einzelarrays aneinanderzureihen, insbesondere wenn die Elektronik oder eine diese umfassende Platine im Querschnitt senkrecht zu optischen Achse nicht über die Arrayfläche hinausragt.

Die Erfindung sieht in allen erfindungsgemäßen Ausführungen vor, dass die die Bilddatenverarbeitung vornehmende Elektronik zumindest teilweise, bevorzugt vollständig auf derselben Trägerplatine angeordnet ist, an welcher alle Bildaufnehmer-Chips des Arrays befestigt sind.

Die Erfindung kann in einer Ausführung auch vorsehen, dass die Leitungsverbindungen von den Bildaufnehmer-Chips zu der genannten Elektronik in Richtung zu den Seiten, bevorzugt zu nur zwei Seiten und besonders bevorzugt nur in Richtung einer der Seiten aus dem Arrayflächenbereich der Trägerplatine oder nach hinten aus der Trägerplatine herausgeführt sind. Die Elektronik selbst kann z. B. über flexible Leitungen sodann an diese Leitungsverbindungen angekoppelt sein. Bevorzugt kann die Elektronik hierdurch quasi beliebig positioniert werden relativ zu dem Array.

Eine bevorzugte Ausführung kann vorsehen, dass die die Bilddatenverarbeitung vornehmende Elektronik eingerichtet ist, die Bilddaten aller Bildaufnehmer-Chips desselben Arrays zu verarbeiten. Sofern die Elektronik die einzelnen Datenströme der individuellen Bildaufnehmer-Chips nicht parallel verarbeiten kann, kann die Erfindung vorsehen, die Daten zeitlich gemultiplext zu verarbeiten. In einem solchen Fall kann wenigstens eine Multiplexer-Elektronik, insbesondere je eine Multiplexer-Elektronik pro Bildaufnehmer-Chip auf der Trägerplatine auf der den Bildaufnehmer-Chips abgewandten Seite angeordnet sein.

Die Erfindung sieht vor, die effektive Arraygröße eines Systems aus mehreren Arrays verschiedener Trägerplatinen zusammenzusetzen. Z. B. können dafür mehrere Trägerplatinen in einer gemeinsamen Befestigungsebene nebeneinanderliegend angeordnet sein, wobei benachbarte Trägerplatinen mit ihren von der Elektronik freigehaltenen Seiten aneinander angrenzen.

Eine solche Anordnung hat den weiteren Vorteil, dass nicht nur die optische Erfassungsfläche vergrößert wird, sondern es kann auch vorgesehen sein, die Trägerplatinen und deren darauf angeordnete Elektroniken, bzw. zumindest die diesen zugeordneten Elektroniken datentechnisch parallel zu betreiben. So muss jede Elektronik nur eine Rechenleistung zur Verfügung stellen, die ausreicht um in gewünschter Zeit die Datenströme der Bildaufnehmer-Chips des jeweiligen Arrays zu verarbeiten, wobei aufgrund des Parallelbetriebes dennoch in derselben Zeit die Datenströme aller Bildaufnehmer-Chips des gebildeten Gesamt-Arrays bearbeitet sind. Ein Gesamtsystem kann damit intern in einzelne Cluster unterteilt sein, wobei jeder Cluster nur die Datenverarbeitung von den Daten des auf ihm befindlichen Arrays von Bildaufnehmer-Chips vornimmt.

In einer übergeordneten Datenverarbeitungs- und/oder -auswertungsanlage können die verarbeiteten Daten jedes Clusters zusammengeführt werden.

Die Anordnung wird bevorzugt so gewählt, dass der Abstand zwischen den optischen Achsen von zwei in derselben Spalten- und/oder Reihenrichtung unmittelbar benachbart zueinander angeordneten Bildaufnehmer-Chips / Objektiven von verschiedenen Trägerplatinen dem Abstand zwischen den optischen Achsen der Bildaufnehmer-Chips /Objektiven des Arrays von einer jeden Trägerplatine entspricht. Es kann so aus mehreren Arrays bzw. Trägerplatinen ein Gesamtarray gebildet werden, das z. B. alle Probenkammern einer Mikrotiterplatte parallel erfassen kann.

Eine Weiterbildung, die mit allen vorherigen Ausführungen kombinierbar ist, kann vorsehen, dass das System eine Befestigungsstruktur umfasst, an welcher wenigstens eine Trägerplatine, bevorzugt alle Trägerplatinen, und die Objektive der Bildaufnehmer-Chips des wenigstens einen Arrays, bevorzugt alle Objektive der Bildaufnehmer-Chips aller Arrays, insbesondere auch die jeweiligen Beleuchtungselemente aller Objektive bzw. Bildaufnehmer-Chips gemeinsam befestigt sind. Es ergibt sich so eine einzige zusammenhängende Einheit aus einer Vielzahl von Mikroskopen, die gemeinsam und damit für alle Mikroskope gleich gehandhabt werden kann.

Die Befestigungsstruktur kann dabei einen einzigen Halterahmen umfassen in welchem alle Objektive des wenigstens einen Arrays von Bildaufnehmer-Chips, bevorzugt bei mehreren Arrays die Objektive von allen Arrays gemeinsam befestigt sind. Ein solcher Halterahmen kann in Richtung der optischen Achsen in einem Abstand vor den Bildaufnehmer-Chips angeordnet sein.

Jedes der Objektive in der Befestigungsstruktur, bevorzugt in dem Halterahmen kann weiter bevorzugt zumindest in Richtung der optischen Achse relativ zum zugeordneten Bildaufnehmer-Chip positionsverstellbar ausgeführt sein. Z. B. kann dies durch eine Verdrehbarkeit des Objektivs in einer Gewindehalterung, z. B. einem Gewinde des Halterahmens realisiert sein.

Es kann auch nur eine spielfreie optisch-achsparallele Verschieblichkeit des Objektivs in einer Ausnehmung des Halterahmens vorgesehen sein. Nach Positionierung kann das Objektiv z. B. durch Verklebung fixiert werden. Es besteht so die Möglichkeit die Bildebene jedes Objektivs individuell zum zugeordneten Bildaufnehmer-Chip zu justieren.

Eine besonders bevorzugte Ausführung des Systems kann es vorsehen, dass jedes der Objektive ein zylindrisches, bevorzugt kreiszylindrisches Rohr umfasst, welches über dessen gesamte axiale Länge den gleichen Außenquerschnitt, bevorzugt Außendurchmesser hat, wobei in dem Rohr die Linsen des Objektives aufgenommen sind. Hierdurch ergibt sich eine konstruktiv einfache und platzsparende Anordnungsmöglichkeit der Objektive nebeneinander.

Die Erfindung kann weiterhin vorsehen, dass die Befestigungsstruktur auch einen weiteren Halterahmen für die Beleuchtungseinrichtungen umfasst, insbesondere einen Halterahmen, in welchem genauso viele Beleuchtungseinrichtungen befestigt sind, wie es Mikroskope in dem gesamten System gibt.

Der Halterahmen für die Beleuchtungseinrichtungen und der Halterahmen für die Objektive können in der Befestigungsstruktur so zueinander angeordnet sein, dass eine Probenplatte zwischen den beiden Halterahmen positionierbar ist. Die Befestigungsstruktur kann dafür mit den beiden Halterahmen eine U-Form ausbilden, die eine Probenplatte umgeben kann. Die beiden Halterahmen bilden dabei bevorzugt die Schenkel der U-Form. Durch diese Anordnung sind die beiden Halterahmen fest miteinander verbunden.

Hierdurch kann eine Durchlicht-Anordnung geschaffen werden, insbesondere bei welcher das Licht von den Beleuchtungseinrichtungen kommend von oben die Probenkammern durchleuchtet und in die unter den Böden der Probenkammern liegenden Mikroskope gelangt.

Jede Beleuchtungseinrichtung eines jeweiligen Mikroskops kann durch eine Lichtleitfaser gebildet werden, deren Lichtaustrittsende in dem Halterahmen gehalten ist. Der Halterahmen kann in einer möglichen Ausbildung für jede Lichtleitfaser in Strahlrichtung nach dem Lichtauskopplungsende der Lichtleitfaser ein Linsen- Blenden-System aufweisen, um eine köhler'sche Beleuchtung auszubilden. Ein solches Linsen-Blende(n)-System kann jedoch auch auf der Lichteinkopplungsseite der Lichtleitfaser vorgesehen sein, d.h. in Strahlrichtung vor der Lichteinkopplungsfläche der Lichtleitfaser.

Die Lichtleitfasern können jeweils eigene Lichtquellen aufweisen, z.B. Leuchtdioden, bevorzugt Weißlichtleuchtdioden.

Die Erfindung kann aber auch vorsehen, dass alle Lichtleitfasern von einer gemeinsamen Lichtquelle versorgt werden. Eine solche gemeinsame Lichtquelle kann z. B. wiederrum eine Leuchtdiode sein.

Eine bevorzugte Ausführung kann vorsehen, als gemeinsame Lichtquelle eine Ulbricht-Kugel zu nutzen, in welche mehrere separate Lichtquellen, z. B. Leuchtdioden ihr Licht einstrahlen. Ein jeweiliges zur Lichteinkopplung vorgesehenes Ende jeder Lichtleitfaser ist sodann an eine Öffnung in der Mantelfläche der Ulbricht-Kugel angeschlossen. Hierbei können alle Lichtleitfasern an dieselbe gemeinsame Öffnung angeschlossen sein.

Ein Anschluß kann hier mittelbar über ein Linsen-Blende(n)-System erfolgen, sofern die Strahlformung zur Bildung einer Köhler'schen Beleuchtung auf der Lichteinkoppelseite der Lichtleitfasern realisiert ist.

Bei der Nutzung der Ulbricht-Kugel als Lichtquelle kann es vorgesehen sein, dass mehrere Leuchtdioden oder mehrere andere Lichterzeuger angeschlossen sind, mittels denen Licht unterschiedlicher spektraler Zusammensetzung in die Ulbricht-Kugel eingekoppelt werden kann. So besteht die Möglichkeit ohne Änderung des Strahlengangs das Beleuchtungsspektrum zu ändern.

In Verbindung mit alle vorgenannten Ausführungen der Lichtquellen(n) kann die Erfindung vorsehen LED's getaktet zu betreiben, um die "Beleuchtungslast" auf die Proben in den Probenkammern zu begrenzen auf die Zeitpunkte, wenn Bilder erfasst werden.

Eine Weiterbildung der Erfindung kann es vorsehen, dass das System eine Aktorik, insbesondere Piezo-Aktorik umfasst, mittels welcher die Befestigungsstruktur zumindest in Richtung der optischen Achse (Z), bevorzugt auch in einer Ebene senkrecht dazu (XY) relativ zu einer Halterung einer Probenplatte und damit auch relativ zu einer darin aufgenommenen Probenplatte verfahrbar ist. Es besteht hierdurch die Möglichkeit die Fokuslage der einzelnen Mikroskope (aus Bildaufnehmer-Chip und Objektiv, ggfs. auch der Beleuchtungseinrichtung) bezogen auf die zu erfassende Probe gleichzeitig für alle Kameras des Systems zu ändern. Individuelle Fokussiereinrichtungen können so entfallen, was das System konstruktiv und elektronisch vereinfacht.

Da üblicherweise die zu erfassenden Proben in den Probenkammern nicht alle dieselbe Fokuslage aufweisen kann dies dazu führen, dass eine oder mehrere Mikroskope korrekt fokussiert und eine oder mehrere Mikroskope falsch, also unscharf fokussiert zur jeweiligen Probe ausgerichtet sind.

Um dieses Problem zu lösen kann eine Weiterbildung vorsehen, dass das System eine Steuereinheit umfasst, mit der die genannte Aktorik periodisch wiederkehrend angesteuert wird, um innerhalb einer Ansteuerperiode bevorzugt schrittweise nacheinander verschiedene Abstände (betrachtet in Richtung der optischen Achsen) zwischen der Befestigungsstruktur und der Halterung einer Probenplatte bzw. der gehaltenen Probenplatte einzustellen und für jeden eingestellten Abstand mit allen Bildaufnehmer-Chips des oder der Arrays wenigstens ein Bild aufzunehmen.

Es werden so in jeder Ansteuerungsperiode eine Vielzahl von Bildern, bevorzugt eine der Schrittzahl entsprechende Anzahl von Bildern aufgenommen mit jeweils einer anderen Fokussierung, so dass sowohl scharfe als auch unscharfe Bilder erfasst werden, insbesondere da die Justierung bevorzugt so vorgenommen ist, dass die ideale Fokuslage während einer solchen Ansteuerungsperiode mit jedem Mikroskop durchfahren wird.

Gemäß der Erfindung wird für jeden Bildaufnehmer-Chip aus den aufgenommenen Bildern jeder Ansteuerungsperiode das schärfste Bild aller Bilder selektiert und nur dieses einer weiteren Bildauswertung zugeführt und die übrigen Bilder derselben Ansteuerungsperiode werden verworfen. Diese Bildverarbeitung kann von der Elektronik vorgenommen werden, die auf der Trägerplatine angeordnet ist oder zumindest einem jeweiligen Array zugeordnet ist.

Hierfür kann es vorgesehen sein, das während der Ansteuerungsperiode bei einem jeweiligen Abstand aufgenommene Bild hinsichtlich seiner Bildschärfe mit dem zuvor aufgenommenen oder zuvor gespeicherten zu vergleichen, bei schlechterer Schärfe das aktuelle zu verwerfen und das bisherige weiter zu speichern bzw. bei besserer Schärfe das aktuelle zu speichern für den nächsten folgenden Vergleich und das bisherige zu verwerfen. So muss bei dieser Ausführung nicht ein kompletter Satz von Bildern einer Ansteuerungsperiode gespeichert werden.

Die Erfindung kann weiterhin vorsehen, dass das System eine Aktorik umfasst, mittels welcher die Befestigungsstruktur senkrecht zu den optischen Achsen, insbesondere in Richtung der Reihen und Spalten der Bildaufnehmer-Chips relativ zu einer Halterung einer Probenplatte und damit zur einer gehaltenen Probenplatte verfahrbar ist. Dies ermöglicht das feldweise Erfassen einer Probenplatte mit einem Array von Mikroskopen, das hinsichtlich Anzahl und Anordnung kleiner ist als die Anzahl von Probenkammern (Wells) in der gesamten Probenplatte. Auf diese Weise lassen sich z. B. Filmsequenzen, bevorzugt mit einem zeitlichen Abstand von weniger als 8 Sekunden zwischen aufeinanderfolgenden Bildern eines Videos jeder Probenkammer, bei allen Probenkammern (Wells) einer Mikrotiterplatte, bevorzugt einer 384-Well Mikrotiterplatte gemäß ANSI-Industriestandard erzeugen.

In einem System, bei dem die Anzahl der Mikroskope der Anzahl der Probenkammern einer Probenplatte entspricht kann eine Aktorik zur Bewegung der Befestigungsstruktur senkrecht zu den optischen Achsen grundsätzlich entfallen, kann jedoch auch hier bevorzugt vorgesehen sein, um eine zumindest einmalige laterale Justage der Mikroskope zur zu untersuchenden Probenplatte zu vereinfachen. Bevorzugt sind somit die Aktorik zur Bewegung der Befestigungsstruktur parallel zu den optischen Achsen und die Aktorik zur Bewegung senkrecht zu den optischen Achsen gemeinsam in einem erfindungsgemäßen System realisiert.

Besonders vorteilhaft ist die Ausführung, wenn die Halterung der Probenplatte im Erdbezugssystem ortsfest angeordnet ist, also das Mikroskoparray und das bevorzugte Array von Beleuchtungseinrichtungen im Erdbezugssystem, insbesondere über die für alle Arrays gemeinsame Befestigungsstruktur bewegt wird. Dadurch werden keine Bewegungsimpulse auf die Proben ausgeübt, wie es bislang beim Stand der Technik der Fall ist.

Bevorzugt sieht die Erfindung vor, dass jedem Einzelbild, das mit dem Bildaufnehmer-Chip jedes Mikroskops erfasst wird, ein Zeitstempel, insbesondere eine Zeitinformation über den Erfassungszeitpunkt zugeordnet wird, bevorzugt wobei der Zeitstempel auf einer für alle Bilder / Bildaufnehmer-Chips gemeinsamen Uhr beruht. So kann der zeitliche Abstand zwischen Bildern eines jeweiligen Mikroskops sowie auch zwischen Bildern verschiedener Mikroskope ermittelt und ggfs. dokumentiert werden. Eine dafür genutzte Uhr kann z. B in der gemeinsamen Elektronik implementiert sein, welche auf der Trägerplatine angeordnet ist oder zumindest mit dieser verbunden ist.

Ausführungen der Erfindung werden nachfolgend anhand der Figuren beschrieben:

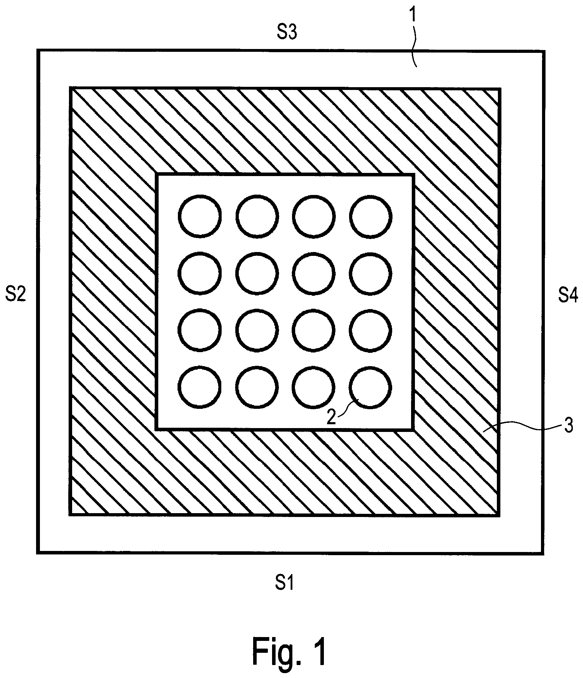

Figur 1 zeigt in Aufsicht eine erste, aber nicht zur Erfindung zählenden Ausführung, bei der eine Trägerplatine 1 ein Array von Bildaufnehmer-Chips 2 umfasst. Hier sind die Chips in einer 4 x 4 Matrix angeordnet. Darüber, jedoch hier nicht visualisiert ist ein korrespondierendes Array von Objektiven und bevorzugt Beleuchtungseinrichtungen angeordnet, um so insgesamt ein Mikroskop-Array zu bilden.

Seitlich um das Array herum ist eine Elektronik 3 angeordnet, die hier also zu allen vier Seiten S1, S2, S3 und S4 das Array umgibt.

Mit dieser Anordnung können z. B. 16 Proben in den Probenkammern einer Mikrotiterplatte parallel erfasst werden. Sollen mehr Proben erfasst werden, muss die hier gezeigte Anordnung senkrecht zu den optischen Achsen verschoben werden, wofür eine Aktorik vorgesehen sein kann.

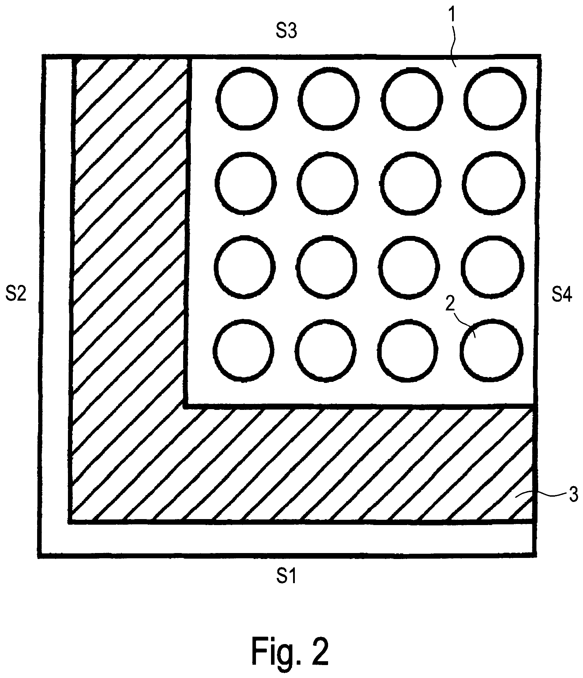

Figur 2 zeigt eine Alternative, bei der die Platine 1 ebenso ein 4 x 4 Array von Bildaufnehmer-Chips 2 umfasst. Hier ist die Elektronik 3 nur zu zwei Seiten, nämlich an den Seiten S1 und S2 neben dem Array angeordnet. Dies ermöglicht es 4 solcher Platinen in 4 Quadranten nebeneinander anzuordnen und ein Gesamt-Array der Größe 8 x 8 zu bilden. Jede Trägerplatine kann mit seiner Elektronik, z. B. einem FPGA, bei dieser und den nachfolgenden Ausführungen einen autarken Cluster bilden, der eingerichtet ist die Daten der Bildaufnehmer-Chips seines Arrays zu verarbeiten und an einer Schnittstelle zu übergeben an eine Bildauswertung. Die Abbildung ist symbolisch zu verstehen und ist nicht maßstabgerecht.

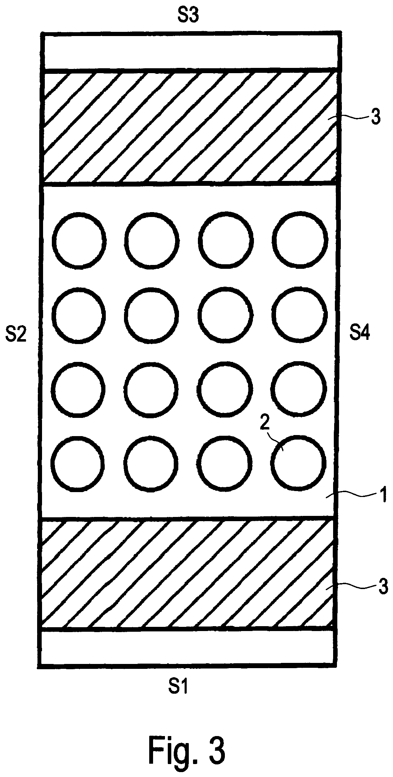

Figur 3 zeigt eine weitere Alternative, bei welcher die Elektronik zu den beiden gegenüberliegenden Seiten S1 und S3 auf der Trägerplatine 1 neben dem Array angeordnet ist. Hier kann eine Aneinanderreihung von Platinen 1 an den Seiten S4 oder S2 erfolgen. Die Abbildung ist symbolisch zu verstehen und ist nicht maßstabgerecht.

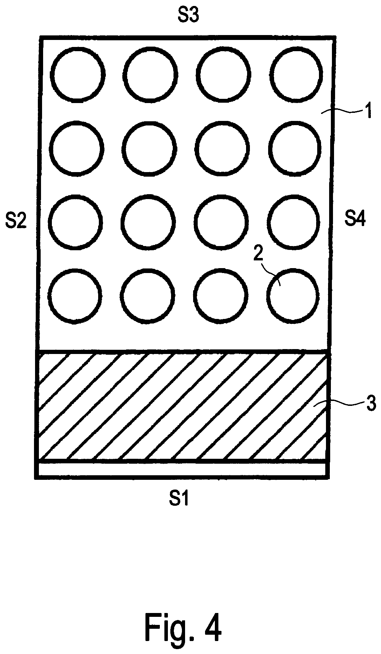

Die bevorzugte Ausführung wird in Figur 4 gezeigt. Das Array der Größe 4 x 4 ist hier an drei Seiten S2, S3 und S4 frei von Elektronik gehalten und somit an diesen Seiten mit anderen gleichbauenden Platinen 1 reihbar. Die Elektronik ist hier nur zur Seite S1 neben dem Array angeordnet.

Bevorzugt wird die Reihbarkeit der Ausführungen der Figuren 1 bis 4 erreicht, wenn die Platinen an den von Elektronik frei gehaltenen Seiten nicht über die dort angeordneten Bildaufnehmer-Chips herüberragt oder nur so weit, dass bei einer Reihung an einer solchen Seite der Abstand der optischen Achsen von zwei Bildaufnehmer-Chips bzw. deren Objektiven von zwei verschiedenen Platinen exakt auch den Abstand einnehmen kann, der bei jeder einzelnen Platine innerhalb von deren Array besteht. So kann platinenübergreifend in dem gebildeten Gesamtarray aus allen Einzelarrays ein äquidistanter Abstand der optischen Achsen erzielt werden. Die Abbildung ist symbolisch zu verstehen und ist nicht maßstabgerecht.

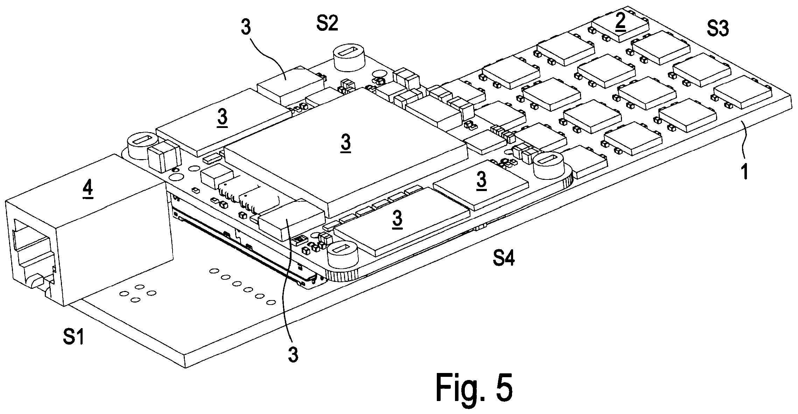

Die Figur 5 zeigt detaillierter eine zuvor als Cluster bezeichnete Einheit, die eine solche Trägerplatine 1 umfasst, auf der die Bildaufnehmer-Chips 2 in einer reihen- und Spaltenanordnung positioniert sind, hier als 4 x 4 Anordnung. Die Erfindung ist nicht auf diese konkrete Anordnung beschränkt, sondern kann Arrays allgemein mit n x m - Anordnung ausbilden, wobei bevorzugt n und m größer gleich 2 sind.

Hier ist zur Seite S1 neben dem Array die Elektronik 3 angeordnet, die von der Trägerplatine 1 ebenfalls getragen wird. Dabei kann die Elektronik 3 in einer anderen Ebene angeordnet sein, als die Bildaufnehmer-Chips 2. Weiterhin ist erkennbar, dass die Trägerplatine 1 an der Seite S1 auch eine Schnittstelle 4 aufweist, an welcher die Bilddaten, die von allen Bildaufnehmer-Chips 2 gesammelt werden an eine übergeordnete Bildauswertung übergeben werden können.

Ohne Beschränkung auf die gezeigten Figuren kann die Erfindung mit allgemeiner Gültigkeit vorsehen, dass nach Übergabe von jeweils einem neuen Bild eines jeden Bildaufnehmer-Chips an eine Bildauswertungseinheit, insbesondere über die genannte Schnittstelle 4, dieses jedem Bildaufnehmer-Chip zugeordnete Bild an ein jeweiliges Video angehängt wird, das zu jedem Bildaufnehmer-Chip 2 aus den Bildern gebildet wird. Es kann dann unmittelbar nach der Zufügung des Bildes in das Video eine Bildauswertung erfolgen, z. B. eine Spurverfolgung einer beobachteten sich bewegenden Probe erfolgen, so dass also die Bildauswertung auch zu jedem neu hinzugefügten Bild erfolgt und nicht erst nach Erstellung eines Gesamtvideos.

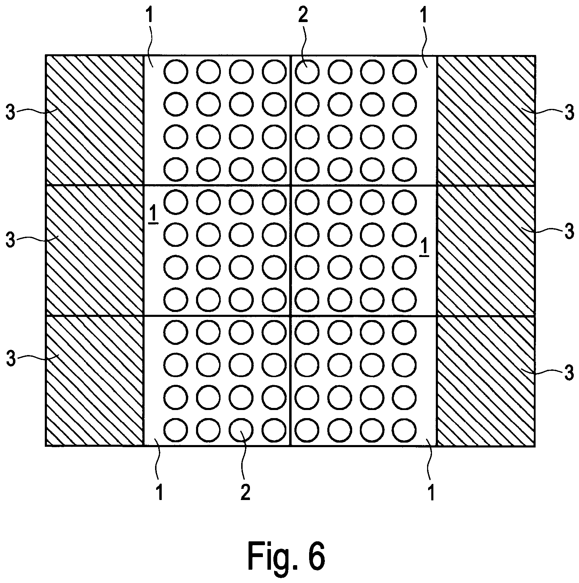

Die Figur 6 zeigt schematisch in Aufsicht eine Aneinanderreihung von Trägerplatinen 1 der Figuren 4 bzw. 5 zu einem Gesamtarray mit 8x12 Mikroskopen. Hierdurch kann eine Mikrotiterplatte mit 96 Probenkammern für alle Probenkammern parallel erfasst werden. Bevorzugt haben dazu in jedem Einzelarray und dem gebildeten Gesamtarray alle optischen Achsen der Kleinmikroskope einen Abstand der dem Abstand der Probenkammern der Mikrotiterplatte entspricht, insbesondere hier konkret 9,1 mm. Da verschiedene Mikrotiterplatten, insbesondere die 96-Well Platten bei gleichen äußeren Abmessungen durchaus leicht unterschiedliche Abstände zwischen den Probenkammern (Wells) haben können sieht die Erfindung bevorzugt vor, die Abstände der optischen Achsen im Array zumindest kleiner als 9,5 mm zu wählen, insbesondere um so alle Abstandsvarianten zu erfassen.

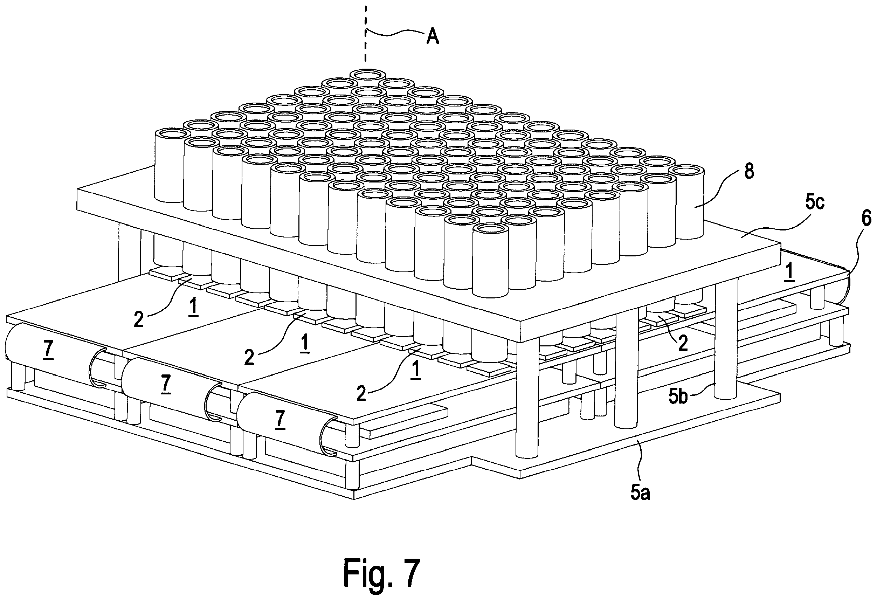

Figur 7 zeigt eine solche Anordnung mit mehr konstruktiven Details. Hier ist erkennbar, dass eine Befestigungsstruktur 5a, 5b, 5c vorgesehen ist, über welche die einzelnen Platinen 1 nebeneinander zur Bildung des Gesamtarrays positionsfest fixiert werden.

Zusätzlich zu den gereihten Platinen 1 können in tieferer Ebene noch weitere Platinen 6 angeordnet sein, die die eingangs genannte Elektronik 3 in der anderen Ebene und/oder Datenverarbeitungselektronik und/oder Bildauswertungselektronik umfassen und an welche die Daten oder Signale über flexible Verbinder 7 übergeben werden.

Für die Erfindung ist es in dieser Ausführung unabhängig von der konkret gezeigten Anordnung der Elektronik wesentlich, dass die Befestigungsstruktur einen Halterahmen 5c umfasst der in einer Ebene in Richtung der optischen Achsen A über den Bildaufnehmer-Chips 2 angeordnet ist und der alle MikroskopObjektive 8 hält, die jeweils einem der Bildaufnehmer-Chips 2 der Arrays zugeordnet sind. Die Objektive 8 sind relativ zueinander und zur Befestigungsstruktur ortsfest montierbar, so dass die hier gezeigte Anordnung insgesamt eine Mikroskopeinheit mit einer Vielzahl von Mikroskopen (hier 96) ausbildet, die alle gemeinsam mit der Einheit gegenüber einer hier nicht gezeigten Mikrotiterplatte bewegbar sind.

Die jeweiligen Objektive 8 sind in dieser Ausführung durch Linsen enthaltende Zylinder mit Kreisquerschnitt ausgebildet, die bevorzugt einen Außendurchmesser kleiner 9 mm haben, weiter bevorzugt kleiner 8 mm.

Die in Figur 7 gezeigte Einheit kann insgesamt mit einer Aktorik in Richtung der optischen Achsen A bewegbar sein zur gleichzeitigen Verstellung der Fokussierung aller Mikroskope 2,8 gegenüber den Proben.

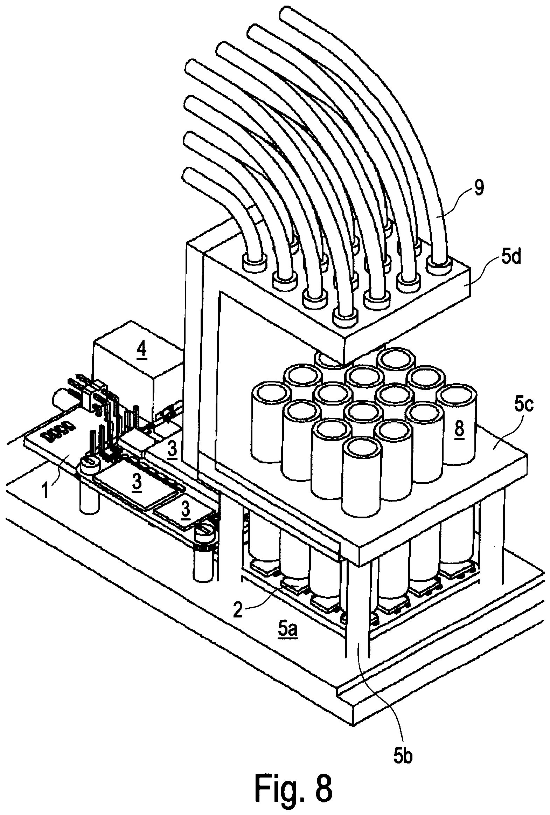

Die Figur 8 zeigt eine Ausführung, bei welcher die Befestigungsstruktur zusätzlich zum Halterahmen 5c für die Objektive 8 auch einen Halterahmen 5d für Beleuchtungseinrichtungen 9 umfasst, die hier als Lichtleitfasern 9 ausgebildet sind. Zwischen den Halterahmen 5c und 5d kann eine nicht gezeigte Probenplatte angeordnet werden, um in einer Durchlichtkonfiguration die Mikroskopie zu betreiben. In der Figur 8 ist eine erfindungsgemäße Vorrichtung gezeigt, die wie bei der Figur 7 durch Aneinanderreihung in der Anzahl der Mikroskope vergrößert werden kann. Die Anordnung der Figur 8 entspricht der Figur 5 unter Hinzufügung der Befestigungsstruktur.

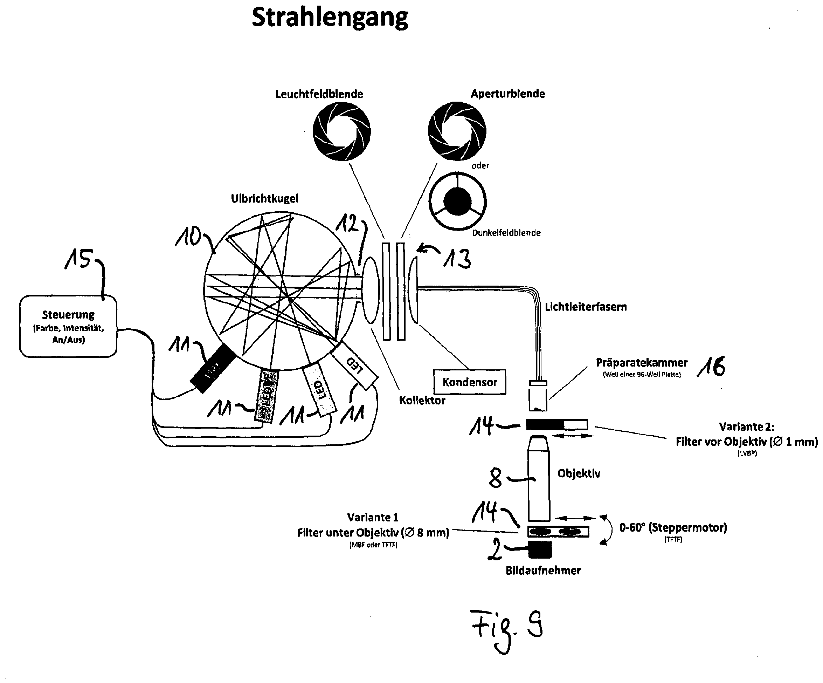

Figur 9 zeigt ein bevorzugtes Arbeitsprinzip eines jeden der mehreren Mikroskope der erfindungsgemäßen Ausführung. Bildaufnehmer-Chip 2 und Mikroskop-Objektiv 8 bilden eines der mehreren Mikroskope der in den vorherigen Figuren gezeigten Vorrichtungen, mit welchem von der Seite des unteren Boden der Probenkammer 16 die darin befindliche Probe beobachtet wird. Platinen und Befestigungsstruktur sind in dieser Figur 9 nicht dargestellt, entsprechen aber bevorzugt der jeweiligen Ausführung, wie sie zu den vorherigen Figuren beschrieben wurde.

Die Beleuchtungseinrichtung des Mikroskops wird gebildet durch eine Lichtleitfaser 9, wie Sie zur Figur 8 beschrieben wurde. Die Lichtquelle für diese und jede andere Lichtleitfaser wird in dieser bevorzugten Ausführung durch eine Ulbricht-Kugel 10 gebildet. Mittels mehrerer Lichterzeuger 11, hier LED's, die Licht unterschiedlichen Spektrums aussenden, kann wahlweise alternativ oder auch in Kombination das Innere der Ulbricht-Kugel beleuchtet werden. Durch die interne Streuung ergibt sich eine homogene Lichtverteilung über den gesamten Raum der Ulbricht-Kugel mit dem Spektrum des einen gewählten Lichterzeugers 11 oder mit einem Mischspektrum aus den Spektren mehrerer gleichzeitig betriebener Lichterzeuger 11. An einer Öffnung 12 der Ulbricht-Kugel ist die Lichtleitfaser 9 mittelbar über ein Linsen-Blenden-System 13 angekoppelt, um eine sogenannte köhler'sche Beleuchtung zu erhalten. In diesem System 13 kann eine Leuchtfeldblende wahlweise mit einer Aperturblende oder einer Dunkelfeldblende kombiniert werden.

Durch Filter 14, die alternativ vor oder hinter dem Objektiv 8 angeordnet sind kann eine auszuwertende Wellenlänge aus dem Spektrum der Lichtquelle 10 oder auch eine konvertierte von einer der Proben z. B. durch Fluoreszenz ausgestrahlte Wellenlänge für die Beobachtung durch den Bildaufnehmer-Chip ausgewählt werden. Durch Verschiebung und/oder Rotation der Filter 14 können unterschiedlich wellenlängenselektiv wirkende Bereiche der Filter 14 ausgewählt werden.

Eine Steuereinheit 15 kann die Lichterzeuger bevorzugt so steuern, dass eine Beleuchtung der Proben nur vorliegt, wenn ein Bild erfasst wird. Zwischen den Bilderfassungen sind die Lichtquellen bevorzugt ausgeschaltet, um die Lichtbelastung der bevorzugt lebenden Proben zu reduzieren oder eine Degradation von Fluoreszenzfarbstoffen zu verringern.

## Patentansprüche

1. System zur videografischen oder fotografischen parallelen Erfassung von Bildern, insbesondere von Proben in den mehreren Probenkammern (16) einer Probenplatte, bevorzugt einer Mikrotiterplatte, umfassend wenigstens ein Array von Mikroskopen (2,8) mit zueinander parallelen optischen Achsen, wobei jedes Mikroskop einen eigenen Bildaufnehmer-Chip (2) und ein eigenes Objektiv (8) umfasst, wobei es
a. wenigstens eine Trägerplatine (1) umfasst auf deren Oberfläche alle Bildaufnehmer-Chips (2) aller Mikroskope (2,8) eines Arrays gemeinsam in einer Zeilen- und Spaltenanordnung nebeneinanderliegend befestigt sind,
b. ein Array von Objektiven (8), insbesondere Mikroskop-Objektiven (8), mit einer korrespondierenden Zeilen- und Spaltenanordnung umfasst, das in Richtung der optischen Achsen (A) vor den Bildaufnehmer-Chips (2) angeordnet ist,
c. eine die Bilddatenverarbeitung vornehmende Elektronik (3) umfasst, mit der aus dem Datenstrom eines jeweiligen Bildaufnehmer-Chips Bilder und Bilderserien generierbar sind, die einer Bildauswertung zugrunde legbar sind,
**dadurch gekennzeichnet, dass**
d. die die Bilddatenverarbeitung vornehmende Elektronik (3) zumindest teilweise, auf derselben Trägerplatine (1) angeordnet ist, an welcher alle Bildaufnehmer-Chips (2) des Arrays befestigt sind und die effektive Arraygröße des Systems aus mehreren Arrays verschiedener Trägerplatinen (1) zusammengesetzt ist, wofür mehrere Trägerplatinen (1) in einer gemeinsamen Befestigungsebene nebeneinanderliegend angeordnet sind und wobei
e. die Elektronik (3) jeder Trägerplatine (1) seitlich neben dem Array von Bildaufnehmer-Chips (2) und/oder hinter dem Array von Bildaufnehmer-Chips (2) angeordnet ist, und
f. die benachbarten Trägerplatinen (1) mit ihren von der Elektronik freigehaltenen Seiten aneinander angrenzen.

2. System nach Anspruch 1, **dadurch gekennzeichnet, dass** es ein Array von Beleuchtungseinrichtungen (9) für jedes einzelne Mikroskop (2,8) umfasst, insbesondere das in Richtung der optischen Achsen (A) der Bildaufnehmer-Chips (2) vor den Objektiven (8) angeordnet ist.

3. System nach Anspruch 1 oder 2, **dadurch gekennzeichnet, dass** die die Bilddatenverarbeitung vornehmende Elektronik (2) an höchstens zwei Seiten (S1, S2 oder S1, S3) neben dem Array von Bildaufnehmer-Chips (2) angeordnet ist, insbesondere an den zwei gegenüberliegenden Seiten (S1, S3) oder an den zwei aneinander angrenzenden Seiten (S1, S2).

4. System nach einem der vorherigen Ansprüche, **dadurch gekennzeichnet, dass** die die Bilddatenverarbeitung vornehmende Elektronik (3) an nur einer Seite (S1) neben dem Array von Bildaufnehmer-Chips (2) angeordnet ist.

5. System nach einem der vorherigen Ansprüche, **dadurch gekennzeichnet, dass** die die Bilddatenverarbeitung vornehmende Elektronik (3) eingerichtet ist, die Bilddaten aller Bildaufnehmer-Chips (2) desselben Arrays zu verarbeiten, insbesondere zeitlich gemultiplext.

6. System nach Anspruch 5, **dadurch gekennzeichnet, dass** wenigstens eine Multiplexer-Elektronik, insbesondere je eine Multiplexer-Elektronik pro Bildaufnehmer-Chip (2) auf der Trägerplatine (1) auf der den Bildaufnehmer-Chips (2) abgewandten Seite angeordnet ist.

7. System nach einem der vorherigen Ansprüche, **dadurch gekennzeichnet, dass** der Abstand zwischen den optischen Achsen (A) von zwei in derselben Spalten- und/oder Reihenrichtung unmittelbar benachbart zueinander angeordneten Bildaufnehmer-Chips (2) / Objektiven (8) / Beleuchtungseinrichtungen (9) von verschiedenen Trägerplatinen (1) dem Abstand zwischen den optischen Achsen (A) der Bildaufnehmer-Chips (2) /Objektiven (8) / Beleuchtungseinrichtungen (9) des Arrays von einer jeden Trägerplatine (1) entspricht.

8. System nach einem der vorherigen Ansprüche, **dadurch gekennzeichnet, dass** es eine Befestigungsstruktur (5a, 5b, 5c, 5d) umfasst, an welcher die wenigstens eine Trägerplatine (1), die Objektive (9) der Bildaufnehmer-Chips (29 des wenigstens einen Arrays, sowie insbesondere die entsprechenden Beleuchtungseinrichtungen (9) gemeinsam befestigt ist.

9. System nach Anspruch 8, **dadurch gekennzeichnet, dass** die Befestigungsstruktur (5a, 5b, 5c, 5d) einen einzigen Halterahmen (5c) umfasst in welchem alle Objektive (8), und insbesondere eine einzigen Halterahmen (5d) umfasst im welchem die entsprechenden Beleuchtungseinrichtungen (9) des wenigstens einen Arrays von Bildaufnehmer-Chips (2), bevorzugt bei mehreren Arrays die Objektive (2) sowie insbesondere die entsprechenden Beleuchtungseinrichtungen (9) von allen Arrays gemeinsam befestigt sind.

10. System nach einem der vorherigen Ansprüche 8 oder 9, **dadurch gekennzeichnet, dass** jedes der Objektive (8) in der Befestigungsstruktur (5a, 5b, 5c, 5d), bevorzugt in dem Halterahmen (5c) in Richtung der optischen Achse (A) relativ zum zugeordneten Bildaufnehmer-Chip (2) positionsverstellbar ist, insbesondere durch eine bevorzugt stufenlose Verdreh- oder Verschiebbarkeit in einer Halterung der Befestigungsstruktur (5a, 5b, 5c, 5d).

11. System nach einem der vorherigen Ansprüche, **dadurch gekennzeichnet, dass** jedes der Objektive (8) ein zylindrisches, bevorzugt kreiszylindrisches Rohr umfasst, welches über dessen gesamte axiale Länge gleichen Außenquerschnitt, bevorzugt Außendurchmesser hat, wobei in dem Rohr die Linsen des Objektives aufgenommen sind.

12. System nach einem der vorherigen Ansprüche 8 bis 11, **dadurch gekennzeichnet, dass** sie eine Aktorik, insbesondere Piezo-Aktorik umfasst, mittels welcher die Befestigungsstruktur (5a, 5b, 5c, 5d) in Richtung der optischen Achse (A) relativ zu einer Halterung einer Probenplatte verfahrbar ist, insbesondere schrittweise.

13. System nach Anspruch 12, **dadurch gekennzeichnet, dass** es eine Steuereinheit umfasst, die eingerichtet ist, die Aktorik periodisch wiederkehrend anzusteuern, um verschiedene Abstände, bevorzugt schrittweise verschiedene Abstände zwischen der Befestigungsstruktur (5a, 5b, 5c, 5d) und der Halterung einer Probenplatte einzustellen und für jeden eingestellten Abstand mit allen Bildaufnehmer-Chips (2) des oder der Arrays wenigstens ein Bild aufzunehmen.

14. System nach Anspruch 13, **dadurch gekennzeichnet, dass** die Steuereinheit eingerichtet ist für jeden Bildaufnehmer-Chip (2) aus den aufgenommenen Bildern jeder Ansteuerungsperiode das schärfste Bild aller Bilder einer weiteren Bildauswertung zuzuführen und die übrigen Bilder derselben Ansteuerungsperiode zu verwerfen.

15. System nach einem der vorherigen Ansprüche 8 bis 14, **dadurch gekennzeichnet, dass** sie eine Aktorik, umfasst, mittels welcher die Befestigungsstruktur (5a, 5b, 5c, 5d) senkrecht zu den optischen Achsen (A), insbesondere in Richtung der Reihen und Spalten der Bildaufnehmer-Chips (2) relativ zu einer Halterung einer Probenplatte verfahrbar ist, insbesondere wobei die Halterung der Probenplatte im Erdbezugssystem ortsfest angeordnet ist.

16. System nach einem der vorherigen Ansprüche, **dadurch gekennzeichnet, dass** der Abstand der optischen Achsen (A) in Reihen und Spaltenrichtung der Bildaufnehmer-Chips (2) und deren Objektive (8) dem Abstand der in denselben Richtungen gemessenen Probenkammern der Probenplatte entspricht, insbesondere kleiner ist als 9,5 mm.

17. System nach einem der vorherigen Ansprüche 13 bis 16, **dadurch gekennzeichnet, dass** jedem Einzelbild, das mit dem Bildaufnehmer-Chip (2) jedes Mikroskops (2, 8) erfasst wird, ein Zeitstempel, insbesondere eine Zeitinformation über den Erfassungszeitpunkt zugeordnet wird, bevorzugt wobei der Zeitstempel auf einer für alle Bilder / Bildaufnehmer-Chips (2) gemeinsamen Uhr beruht.

## Claims

1. System for videographic or photographic parallel capture of images, in particular of samples in the plurality of sample chambers (16) of a sample plate, preferably of a microtitre plate, comprising at least one array of microscopes (2, 8) having mutually parallel optical axes, each microscope comprising a dedicated image recorder chip (2) and a dedicated objective (8), the system
a. comprising at least one carrier circuit board (1), on the surface of which all the image recorder chips (2) of all the microscopes (2, 8) of an array are jointly secured adjacently to one another in a row and column arrangement,
b. comprising an array of objectives (8), in particular microscope objectives (8), with a corresponding row and column arrangement, the array being arranged in front of the image recorder chips (2) in the direction of the optical axes (A),
c. comprising electronics (3) which carry out the image data processing and by means of which, from the data stream of a respective image recorder chip, images and image series are generable which are able to be taken as a basis for image evaluation,
**characterized in that**
d. the electronics (3) which carry out the image data processing are arranged at least partly on the same carrier circuit board (1) on which all the image recorder chips (2) of the array are secured, and the effective array size of the system is composed of a plurality of arrays of different carrier circuit boards (1), for which a plurality of carrier circuit boards (1) are arranged adjacently to one another in a common securing plane, and wherein
e. the electronics (3) of each carrier circuit board (1) are arranged laterally next to the array of image recorder chips (2) and/or behind the array of image recorder chips (2), and
f. the adjacent carrier circuit boards (1) adjoin one another by way of their sides that are kept free of the electronics.

2. System according to Claim 1, **characterized in that** it comprises an array of illumination devices (9) for each individual microscope (2, 8), in particular which is arranged in front of the objectives (8) in the direction of the optical axes (A) of the image recorder chips (2).

3. System according to Claim 1 or 2, **characterized in that** the electronics (2) which carry out the image data processing are arranged next to the array of image recorder chips (2) on at most two sides (S1, S2 or S1, S3), in particular on the two opposite sides (S1, S3) or on the two sides (S1, S2) adjoining one another.

4. System according to any of the preceding claims, **characterized in that** the electronics (3) which carry out the image data processing are arranged next to the array of image recorder chips (2) on only one side (S1).

5. System according to any of the preceding claims, **characterized in that** the electronics (3) which carry out the image data processing are configured to process the image data of all the image recorder chips (2) of the same array, in particular in a temporally multiplexed manner.

6. System according to Claim 5, **characterized in that** at least one multiplexer electronics unit, in particular one respective multiplexer electronics unit per image recorder chip (2), is arranged on the carrier circuit board (1) on the side facing away from the image recorder chips (2).

7. System according to any of the preceding claims, **characterized in that** the distance between the optical axes (A) of two image recorder chips (2) / objectives (8) / illumination devices (9) - arranged directly adjacent to one another in the same column and/or row direction - from different carrier circuit boards (1) corresponds to the distance between the optical axes (A) of the image recorder chips (2) / objectives (8) / illumination devices (9) of the array from each carrier circuit board (1) .

8. System according to any of the preceding claims, **characterized in that** it comprises a securing structure (5a, 5b, 5c, 5d), to which the at least one carrier circuit board (1), the objectives (9) of the image recorder chips (29 of the at least one array, and also in particular the corresponding illumination devices (9) are jointly secured.

9. System according to Claim 8, **characterized in that** the securing structure (5a, 5b, 5c, 5d) comprises a single holding frame (5c) in which are jointly secured all the objectives (8), and in particular comprises a single holding frame (5d) in which are jointly secured the corresponding illumination devices (9) of the at least one array of image recorder chips (2), preferably in the case of a plurality of arrays the objectives (2) and also in particular the corresponding illumination devices (9) of all the arrays.

10. System according to either of the preceding Claims 8 and 9, **characterized in that** each of the objectives (8) in the securing structure (5a, 5b, 5c, 5d), preferably in the holding frame (5c), is positionally adjustable in the direction of the optical axis (A) relative to the assigned image recorder chip (2), in particular by means of a preferably continuously variable rotatability or displaceability in a mount of the securing structure (5a, 5b, 5c, 5d).

11. System according to any of the preceding claims, **characterized in that** each of the objectives (8) comprises a cylindrical, preferably circular-cylindrical, tube which has the same external cross-section, preferably external diameter, over its entire axial length, the lenses of the objective being accommodated in the tube.

12. System according to any of the preceding Claims 8 to 11, **characterized in that** it comprises an actuator system, in particular a piezo-actuator system, by means of which the securing structure (5a, 5b, 5c, 5d) is movable in the direction of the optical axis (A) relative to a mount of a sample plate, in particular in a stepwise manner.

13. System according to Claim 12, **characterized in that** it comprises a control unit configured to activate the actuator system in a periodically recurring manner in order to set different distances, preferably step by step different distances, between the securing structure (5a, 5b, 5c, 5d) and the mount of a sample plate and to record at least one image for each set distance using all the image recorder chips (2) of the array(s).

14. System according to Claim 13, **characterized in that** the control unit is configured, for each image recorder chip (2), from the recorded images in each activation period, to feed the sharpest image of all the images for further image evaluation and to discard the remaining images in the same activation period.

15. System according to any of the preceding Claims 8 to 14, **characterized in that** it comprises an actuator system by means of which the securing structure (5a, 5b, 5c, 5d) is movable perpendicularly to the optical axes (A), in particular in the direction of the rows and columns of the image recorder chips (2), relative to a mount of a sample plate, in particular wherein the mount of the sample plate is arranged in a stationary fashion in the Earth reference system.

16. System according to any of the preceding claims, **characterized in that** the distance between the optical axes (A) in the row and column directions of the image recorder chips (2) and the objectives (8) thereof corresponds to the distance between the sample chambers of the sample plate measured in the same directions, and in particular is less than 9.5 mm.

17. System according to any of the preceding Claims 13 to 16, **characterized in that** each individual image captured by the image recorder chip (2) of each microscope (2, 8) is assigned a time stamp, in particular time information about the time of capture, preferably wherein the time stamp is based on a clock common to all the images / image recorder chips (2).

## Revendications

1. Système de capture parallèle vidéographique ou photographique d'images, en particulier d'échantillons, dans la pluralité de chambres d'échantillons (16) d'une plaque à échantillons, de préférence une plaque de microtitration, ledit système comprenant au moins un réseau de microscopes (2, 8) pourvus d'axes optiques parallèles entre eux, chaque microscope comprenant sa propre puce de capture d'image (2) et son propre objectif (8), ledit système comprenant
a. au moins une carte de support (1) sur la surface de laquelle toutes les puces de capture d'image (2) de tous les microscopes (2, 8) d'un réseau sont fixées ensemble les unes à côté des autres suivant une disposition en lignes et colonnes,
b. un réseau d'objectifs (8), en particulier d'objectifs de microscope (8), suivant une disposition correspondante en lignes et colonnes, qui est disposé devant les puces de capture d'image (2) dans la direction des axes optiques (A),
c. une électronique (3) qui effectue le traitement de données d'image et avec laquelle des images et des séries d'images, qui peuvent être utilisées comme base pour une évaluation d'image, peuvent être générées à partir du flux de données d'une puce de capture d'image respective
**caractérisé en ce que**
d. l'électronique (3) effectuant le traitement des données d'image est disposée au moins en partie sur la même carte de support (1) sur laquelle sont fixées toutes les puces de capture d'image (2) du réseau et la taille effective du réseau du système est composée de plusieurs réseaux de différentes cartes de support (1) ce pour quoi plusieurs cartes de support (1) sont disposées les unes à côté des autres dans un plan de fixation commun et
e. l'électronique (3) de chaque carte de support (1) est disposée latéralement à côté du réseau de puces de capture d'image (2) et/ou derrière le réseau de puces de capture d'image (2), et
f. les cartes de support adjacentes (1) sont adjacentes les unes aux autres sur leurs côtés sans électronique.

2. Système selon la revendication 1, **caractérisé en ce qu'**il comprend un réseau de dispositifs d'éclairage (9) destinés à chaque microscope individuel (2, 8), notamment dans la direction des axes optiques (A) des puces de capture d'image (2) devant les objectifs (8).

3. Système selon la revendication 1 ou 2, **caractérisé en ce que** l'électronique (2) effectuant le traitement de données d'image est disposée sur au plus deux côtés (S1, S2 ou S1, S3) à côté du réseau de puces de capture d'image (2), notamment sur les deux côtés opposés (S1, S3) ou sur les deux côtés adjacents (S1, S2).

4. Système selon l'une des revendications précédentes, **caractérisé en ce que** l'électronique (3) effectuant le traitement de données d'image est disposée sur un seul côté (S1) à côté du réseau de puces de capture d'image (2).

5. Système selon l'une des revendications précédentes, **caractérisé en ce que** l'électronique (3) effectuant le traitement de données d'image est adaptée pour traiter les données d'image de toutes les puces de capture d'image (2) d'un même réseau, notamment de manière multiplexée dans le temps.

6. Système selon la revendication 5, **caractérisé en ce qu'**au moins une électronique de multiplexage, en particulier une électronique de multiplexage par puce de capture d'image (2), est disposée sur la carte de support (1) du côté opposé aux puces de capture d'image (2) .

7. Système selon l'une des revendications précédentes, **caractérisé en ce que** la distance entre les axes optiques (A) de deux puces de capture d'image (2)/objectifs (8)/dispositifs d'éclairage (9) qui sont disposés de manière immédiatement adjacente dans le même sens de colonne et/ou de rangée de différentes cartes de support (1) correspond à la distance entre les axes optiques (A) des puces de capture d'image (2)/d'objectifs (8)/de dispositifs d'éclairage (9) du réseau de chaque carte de support (1).

8. Système selon l'une des revendications précédentes, **caractérisé en ce qu'**il comprend une structure de fixation (5a, 5b, 5c, 5d) sur laquelle l'au moins une carte de support (1), les objectifs (9) des puces de capture d'image (29 d'au moins un réseau, et en particulier les dispositifs d'éclairage (9) correspondants sont fixés ensemble.

9. Système selon la revendication 8, **caractérisé en ce que** la structure de fixation (5a, 5b, 5c, 5d) comprend un cadre de retenue unique (5c) dans lequel tous les objectifs (8), et notamment un cadre de retenue unique (5d) dans lequel les dispositifs d'éclairage (9) correspondants de l'au moins un réseau de puces de capture d'image (2), de préférence dans le cas de plusieurs réseaux les objectifs (2) et en particulier les dispositifs d'éclairage (9) correspondants de tous les réseaux sont fixés ensemble.

10. Système selon l'une des revendications précédentes 8 ou 9, **caractérisé en ce que** chacun des objectifs (8) dans la structure de fixation (5a, 5b, 5c, 5d), de préférence dans le cadre de retenue (5c) en direction de l'axe optique (A) peut être réglé en position par rapport à la puce de capture d'image (2) associée, notamment grâce à une capacité de rotation ou de déplacement de préférence continue dans un support de la structure de fixation (5a, 5b, 5c, 5d).

11. Système selon l'une des revendications précédentes, **caractérisé en ce que** chacun des objectifs (8) comprend un tube cylindrique, de préférence cylindrique à base circulaire, qui présente la même section extérieure, de préférence le même diamètre extérieur, sur toute sa longueur axiale, les lentilles de l'objectif étant logées dans le tube.

12. Système selon l'une des revendications précédentes 8 à 11, **caractérisé en ce qu'**il comprend un actionneur, notamment un actionneur piézoélectrique, au moyen duquel la structure de fixation (5a, 5b, 5c, 5d) peut être déplacée, notamment pas à pas, en direction de l'axe optique (A) par rapport à un support d'une plaque à échantillon.

13. Système selon la revendication 12, **caractérisé en ce qu'**il comprend une unité de commande qui est conçue pour commander périodiquement les actionneurs afin de régler différentes distances, de préférence des distances différentes par pas, entre la structure de fixation (5a, 5b, 5c, 5d) et le support d'une plaque à échantillons et de capturer pour chaque distance réglée au moins une image avec toutes les puces de capture d'image (2) du réseau ou des réseaux.

14. Système selon la revendication 13, **caractérisé en ce que** l'unité de commande est conçue, pour chaque puce de capture d'image (2), pour fournir l'image la plus nette de toutes les images à partir des images capturées de chaque période de commande en vue d'une évaluation d'image ultérieure et pour éliminer les images restantes de la même période de commande.

15. Système selon l'une des revendications précédentes 8 à 14, **caractérisé en ce qu'**il comprend un actionneur au moyen duquel la structure de fixation (5a, 5b, 5c, 5d) peut être déplacée par rapport à un support d'une plaque à échantillons perpendiculairement aux axes optiques (A), notamment dans la direction des lignes et des colonnes des puces de capture d'image (2), en particulier le support de la plaque à échantillons étant disposé de manière fixe dans le système de référence terrestre.

16. Système selon l'une des revendications précédentes, **caractérisé en ce que** la distance entre les axes optiques (A) dans les directions lignes et colonnes des puces de capture d'image (2) et de leurs objectifs (8) correspond à la distance entre les chambres d'échantillons de la plaque à échantillons mesurées dans les mêmes directions, en particulier est inférieure à 9,5 mm.

17. Système selon l'une des revendications précédentes 13 à 16, **caractérisé en ce que** chaque image individuelle, qui est capturée avec la puce de capture d'image (2) de chaque microscope (2, 8), est associée à un horodatage, en particulier une information temporelle sur l'instant de capture, de préférence l'horodatage étant basé sur une horloge commune à toutes les images/puces de capture d'image (2).
